# EUROPEAN PATENT APPLICATION

(11) **EP 1 041 000 A2**
(43) Date of publication of application: **04.10.2000**
(21) Application number: 00200743.3
(22) Date of filing: 02.03.2000
(51) Int. Cl.: B64C 25/12

(54) **Main landing gear retractable within the fuselage of an airplane**

(30) Priority: 31.03.1999 US 282288
(71) Applicant: THE BOEING COMPANY, Seattle, Washington 98124-2207 (US)
(72) Inventor: Salmon, James Jason, Kirkland, Washington 98034 (US)
(74) Representative: Land, Addick Adrianus Gosling

(57) **Abstract**

A retractable landing gear assembly (20) for an airplane (22). The airplane includes a fuselage (24) defining an outer mold line. The landing gear assembly includes an elongate link (44) for reciprocating the landing gear assembly between an extended position for taxiing and landing of the airplane, and a retracted position to stow the landing gear assembly within the outer mold line of the fuselage to minimize aerodynamic drag. The link includes a first end (72a) and (72b) pivotably attached to the airplane and a longitudinally spaced second end (70a) and (70b). The link first end being a first pivot point and the link second end being a second pivot point. The landing gear assembly also includes an elongate strut assembly (50) having longitudinally spaced first and second ends. The first end being attached to the link second end for swinging movement of the strut assembly between the extended and retracted positions. At least two wheels (56) are journaled to the strut's second end. The landing gear assembly also includes an actuator (90) extending between the airplane and the landing gear assembly for selective actuation of the landing gear assembly between the extended and retracted positions by pivoting the strut assembly about the first and second pivot points.

## Description

The present invention relates to retractable landing gear and, more particularly, retractable main landing gear stowable within the outer mold line of a fuselage.

Modern commercial aircraft are designed according to a variety of structural and aerodynamic design conditions. One such condition is the aerodynamic optimization of the overall aircraft shape. In particular, very early in the design process, analytical and wind tunnel tests are conducted to optimize the outer mold line ("OML") of the fuselage for both high speed and low speed operating conditions. The OML is optimized to produce the lowest drag reasonably possible. Once the OML is defined, any changes to it, such as fairings, are undesirable due to the departure from the optimized shape. As a result, it is desirable to design aircraft with retractable landing gear. In such designs, the landing gear assembly is swung downwardly for taxiing and landing of the aircraft, and is retracted during flight, wherein the landing gear assembly is stowed within a cavity of the aircraft.

Effective landing gear design should provide the optimum combination of overall functional strength, geometric arrangement for adequate ground maneuvering stability, lowest possible weight and minimum aerodynamic drag in the retracted position. An aircraft's main landing gear must be placed sufficiently outboard on opposite sides of the fuselage, such that the aircraft will not tip over during ground maneuvers. On most conventional low-wing airplanes, this is usually not a problem because the gear post of the main landing gear can be attached to the wing, outboard of the side of body. As a result, when the main landing gear is in the extended position, the landing gear is positioned on both sides of the fuselage to satisfy ground maneuvering stability requirements. In high-wing airplanes, attaching the main landing gear to the wing is typically less feasible.

The location of the wing on an aircraft fuselage is driven by the mission requirements and compromises made in the preliminary design phase. High-wing, mid-wing, or any other aircraft in which the attachment of landing gear to the wing is impractical, often have large, complex landing gear arrangements with weight-inefficient structure and systems. In any land-based airplane equipped with wheels, the struts must project the wheels to a point sufficiently below the keel of the fuselage, such that the fuselage does not strike the ground during landing, taxi, or rotation of the aircraft during take-off or landing. Landing gear attached to high wings for example, have unusually long struts, bracing, and support structure. This is undesirable because of the high drag loads when the gear is extended during flight and the resultant weight and complexity. As a result, it is highly desirable to mount and stow the main landing gear within the fuselage.

One proposed solution that satisfies ground maneuvering stability requirements is to extend the body frames of the fuselage beyond the fuselage side of body. In such configurations, the landing gear is mounted to the body frame extensions, such that the main posts are sufficiently spaced outboard of each other to satisfy stability requirements. However, in order to minimize the aerodynamic drag associated with the increase in frontal area due to the body frame extensions, an aerodynamic fairing is wrapped around the external structure. Despite this streamlining effort, such a configuration alters the OML from its optimized shape and, therefore, results in an undesirable increase in airplane aerodynamic drag.

Another proposed solution to widen the stance of the main landing gear for stability purposes is set forth in U.S. Patent No. 3,899,147, issued to Masclet et al. Masclet et al. teach the use of a multi-link main landing gear assembly that includes four pivot points to sufficiently spread the landing gear in the outboard direction for stability requirements. The landing gear of Masclet et al. also requires an aerodynamic fairing disposed on the outboard sides of the lower lobe of the fuselage to accommodate attachment and stowage of the landing gear within the fuselage. This configuration is undesirable for several reasons.

First, such an assembly is complex due to the multiple links and pivot points. As a result, such an assembly is not only expensive to manufacture, but also is difficult and, therefore, expensive to maintain. Another problem associated with the landing gear of Masclet et al. is the requirement of the aerodynamic fairing to the lower lobe of the fuselage. As noted above, such a fairing increases the frontal area and, therefore, the overall aerodynamic drag of the airplane. This is undesirable because increased drag results in less revenue-generating weight the airplane could otherwise carry. Additionally, because of the complex linkage arrangement, such a landing gear is undesirably heavy.

Thus, there exists a need for a weight efficient landing gear assembly that has a sufficiently wide stance to satisfy ground maneuvering requirements, and can also be stowed within the airplane body without the use of body fairings.

In accordance with the present invention, a retractable landing gear for an airplane is provided. The airplane includes a fuselage defining an outer mold line. The landing gear includes an elongate link for reciprocating the landing gear between an extended position for taxiing and landing of the airplane, and a retracted position to stow the landing gear within the outer mold line of the fuselage to minimize aerodynamic drag. The link has a first end pivotably attached to the airplane and a longitudinally-spaced second end. The link first end defining a first pivot point and the link second end defining a second pivot point.

In accordance with further aspects of this invention, the landing gear assembly further includes an elongate strut assembly having longitudinally-spaced first and second ends. The first end being pivotably attached to the link second end for swinging movement of the strut assembly between the extended and retracted positions. The landing gear assembly also includes at least two wheels journaled to the strut second end.

In accordance with other aspects of this invention, the landing gear assembly also includes an actuator extending between the airplane and the landing gear assembly for selective actuation of the landing gear assembly between the extended and retracted positions by pivoting the strut assembly about the first and second pivot points.

In accordance with still yet other aspects of this invention, the landing gear assembly further includes a foldable linkage assembly pinned between the airplane and the strut assembly for stiffening the strut assembly in the extended position.

A landing gear assembly formed in accordance with the present invention has several advantages over currently available landing gear assemblies. First, stowing the landing gear within the fuselage without either modifying the frames of the fuselage to include body frame extensions or aerodynamic fairings results in a fuselage that may be aerodynamically optimized according to high- and low-speed performance requirements. As a result, there is better overall airplane performance, such as better speed at a given fuel burn rate or a lower fuel burn rate at a given speed. Further, a landing gear formed in accordance with the present invention is mechanically simpler due to the lack of multiple complex linkage assemblies. Such a landing gear is not only lighter in weight, but is also simpler and cheaper to manufacture and maintain than those currently proposed. Thus, a landing gear formed in accordance with the present invention is economical, lightweight and results in a significant reduction in aerodynamic drag due to the landing gear being stowed within the outer mold line of the fuselage.

The foregoing aspects and many of the attendant advantages of this invention will become better understood by reference to the following detailed description, when taken in conjunction with the accompanying drawings, wherein:
FIGURE 1 is a front planar view of a landing gear formed in accordance with the present invention showing a portion of the landing gear attached to the fuselage of an airplane;
FIGURE 2 is a perspective view of a landing gear formed in accordance with the present invention showing the main components of the landing gear;
FIGURE 3 is a front planar view of a landing gear formed in accordance with the present invention showing the landing gear midway through its actuation stroke; and
FIGURE 4 is a front planar view of a landing gear formed in accordance with the present invention showing the landing gear stowed completely within the outer mold line of a fuselage of an airplane.

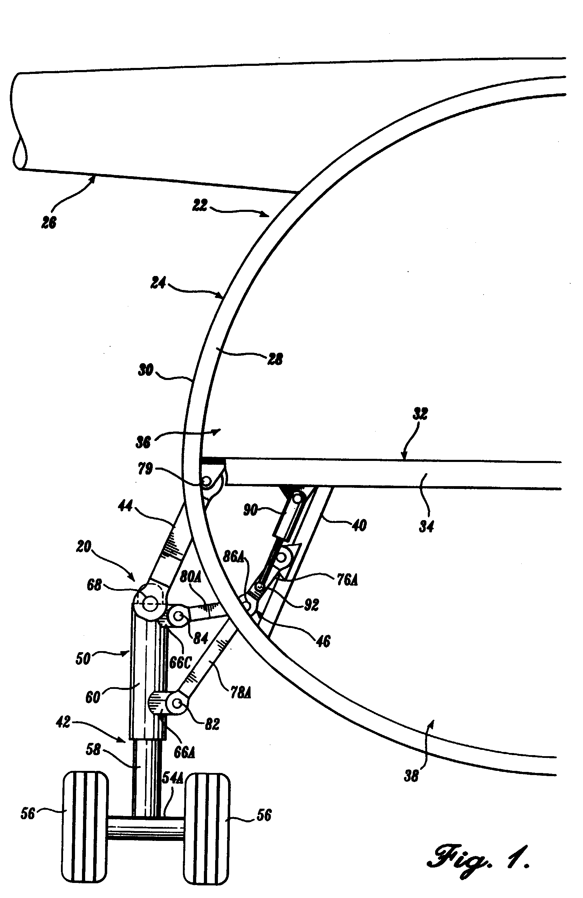

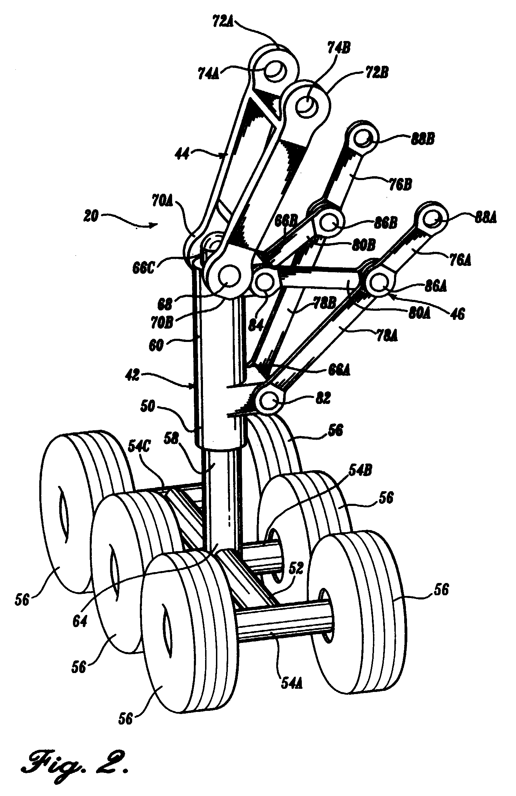

FIGURES 1 and 2 illustrate a preferred embodiment of a landing gear assembly 20 constructed in accordance with the present invention. The landing gear assembly 20 is designed to be used with an airplane 22 having a fuselage 24 and a wing 26 mounted near the top or crown of the fuselage 24. Although a high-wing aircraft configuration is illustrated, other aircraft configurations, such as a low-and mid-wing aircraft, are also within the scope of the present invention.

For ease of illustration, only one landing gear assembly is illustrated in FIGURES 1-4. However, it should be apparent to one skilled in the art that such an airplane configuration has at least a second landing gear assembly (not shown) attached to an opposite side (not shown) of the fuselage. The second landing gear assembly is identical to the landing gear assembly 20. Therefore, it should be apparent that the detailed description herein for the landing gear assembly 20 is also applicable to the second or additional landing gear assembly(s).

The well known fuselage 24 is a pressurized semimonocoque structure and includes a plurality of circumferential frames 28, longitudinal stringers (not shown) and skin 30. Pressure bulkheads (not shown) at the forward and aft ends of the fuselage 24 form a pressure vessel. The fuselage 24 is divided horizontally by a floor 32, which is built up from beams 34 and panels (not shown). The primary materials used in the construction of the fuselage 24 are high-strength, lightweight materials, such as aluminum alloys. The floor panels are most often suitably fiberglass-faced honeycomb. The floor 32 divides the fuselage 24 into an upper lobe 36 and a lower lobe 38. Extending nearly vertically between and attached by well known fasteners (not shown), such as rivets, are a plurality of stanchions 40. As is well known, stanchions assist in the reaction of both external and internal loads applied to various structures, such as fuselage, floor, gear, etc.

The outside perimeter of the frames 28 defines an outer mold line ("OML") of the fuselage 24. As is well known, the OML is set during early aerodynamic configuration of the airplane, wherein the OML is aerodynamically optimized for both low- and high-speed aerodynamic performance and payload sizing specification. Typically, the OML is optimized to minimize the aerodynamic drag by minimizing the wetted and frontal cross sectional areas of the fuselage. The landing gear assembly 20 is pivotably fastened within the OML of the fuselage 24, as is described in greater detail below.

The landing gear assembly 20 includes a truck assembly 42, a pivot beam 44 and a linkage assembly 46. The truck assembly 42 includes an elongate shock strut 50, a truck beam 52, a plurality of axles 54a-54c and a plurality of wheels 56. The shock strut 50 includes telescoping inner and outer shock strut cylinders 58 and 60. The inner shock strut cylinder 58 is axially slidable within the outer cylinder 60. A shock absorber mechanism (not shown), such as an encapsulated shock absorber or oleo, is included inside the telescoping inner and outer cylinders 58 and 60 to dynamically react ground loads encountered during landing and taxiing of the airplane 22. Rotation of the inner cylinder 58 with respect to the outer cylinder 60 is prevented by a well known torsion link assembly (not shown).

As may be best seen by referring to FIGURE 2, the lower end of the inner cylinder 58 includes a bifurcated yoke 64. The bifurcated portion of the yoke 64 is sized to receive the truck beam 52 therein. The truck beam 52 is pivotably attached to the yoke 64 in a well known manner (not shown), such as a pivot pin assembly, to maintain the truck beam 52 parallel to the direction of travel of the airplane 22. The yoke 64 also permits the truck beam 52 to be rotated slightly about the pivot pin assembly to position the landing wheels 56 in a horizontal orientation for landing. As is well known in the art, a hydraulic push pull actuator (not shown) connects the aft end of the truck beam 52 to the inner cylinder 58 to enable positive positioning of the truck beam 52 after take-off, thereby ensuring safe retraction of the landing gear assembly 20 and to keep the wheels 56 clear of adjacent wheel well structures and equipment during flight.

The landing wheels 56 are journaled in a well known manner to the truck beam 52 by the axle housings 54a-54c. Although a total of three sets of landing wheels 56 are illustrated in the preferred embodiment, a landing gear assembly having more or fewer sets of wheels, such as four sets or a single set of wheels, is also within the scope of the present invention.

The outer cylinder 60 includes a plurality of attachment hubs 66a-66c integrally formed with the outer surface of the outer cylinder 60. Each attachment hub 66a-66c is substantially rectangular in configuration and includes a transversely extending bore (not shown). The first attachment hub 66a is located substantially near the lower end of the outer cylinder 60. It projects substantially normal to the longitudinal direction of the truck beam 52 and inboard towards the fuselage 24. The second attachment hub 66b is similarly formed with the upper end of the outer cylinder 60. The third attachment hub 66c projects upwardly from the upper end of the outer cylinder 60. Although integrally formed attachment hubs are preferred, other hubs, such as a separate hub assembly that includes a collar attachable to the outer cylinder, are also within the scope of the present invention.

As may be best seen by referring to FIGURES 1 and 2, the pivot beam 44 is an elongate, substantially "H" shaped member having a bifurcated lower end defining first and second outboard attachment arms 70a and 70b. The outboard arms 70a and 70b are spaced to receive the third attachment hub 66c therebetween and includes a laterally extending bore (not shown) near the terminal end of each arm 70a and 70b. The pivot beam 44 is pivotably attached to the upper end of the shock strut 50 by a pivot pin 68, thereby defining a first pivot point, as is described in greater detail below. The pivot pin 68 extends through the bores of the arms 70a and 70b and the bore of the third attachment hub 66a to pivotably attach the pivot beam 44 to the upper end of the shock strut 50. The other end of the pivot beam 44 is similarly bifurcated to form first and second inboard attachment arms 72a and 72b.

Each inboard attachment arm 72a and 72b includes a laterally extending bore 74a and 74b near the terminal end thereof. The inboard attachment arms 72a and 72b of the pivot beam 44 are pinned to the fuselage 24 in a well known manner to swingingly attach the truck assembly 42 to the airplane 22, thereby defining a second pivot point, as is described in greater detail below. As a non-limiting example, the inboard attachment arms 72 and 72b may be pinned to a landing gear support beam (not shown) extending between adjacent body frames 28 by a well known pivot pin assembly 79. The landing gear support beam is, itself, supported by, and transfers substantial load to a plurality of body frames 28, the fuselage skin 30 and the floor beams 34, as is well known in the art. Lateral stiffness and positioning of the truck assembly 42 is accomplished, in part, by the linkage assembly 46.

The linkage assembly 46 includes elongate inboard drag links 76a and 76b, elongated outboard drag links 78a and 78b and elongated yoke links 80a and 80b. The first attachment hub 66a is sandwiched between the one end of the outboard drag links 78a and 78b. The outboard drag links 78a and 78b are pivotably attached to the first attachment hub 66a by a pivot pin 82 extending through the terminal ends of each link 78a and 78b and through the bore of the first attachment hub 66a. Similarly, the second attachment hub 66b is sandwiched between one end of each yoke link 80a and 80b and are attached by a pivot pin 84. The pivot pin 84 extends through the terminal ends of each yoke link 80a and 80b and through the bore extending through the second attachment hub 66b to pivotably attach the yoke links 80a and 80b to the upper inboard-facing end of the truck assembly 42.

The other ends of the outboard drag links 78a and 78b and the yoke links 80a and 80b are pinned to one end of each inboard drag link 76a and 76b by first and second pivot pins 86a and 86b. Preferably, the outboard drag links 78a and 78b are sandwiched between the yoke links 80a and 80b and the inboard drag links 76a and 76b, such that the links overlap. The overlapping ends of the drag and yoke links are pivotably fastened for folding motion by the pivot pins 86a and 86b. The other ends of the inboard drag links 76a and 76b each include a laterally extending bore 88a and 88b located near the terminal end of each link 76a and 76b.

Thus, as configured, the drag links 76a, 76b, 78a and 78b define a first substantially triangular linkage assembly extending from the first attachment hub 66a, and the yoke links 80a and 80b define a second substantially triangular linkage assembly extending from the second attachment hub 66b to the inboard and outboard drag links.

The linkage assembly 46 is hingedly attached to the airplane 22 by a pivot pin assembly 89 extending between adjacent stanchions 40 located in the lower lobe 38 of the fuselage 24. As a non-limiting example, the pivot pin assembly extends through the bores 88a and 88b of the inboard drag links 76a and 76b to pivotably attach the linkage assembly 46 to the airplane 22. The pivot pin assemblies, in a manner similar to the landing gear support beam described earlier, is supported by and distributes load to a plurality of stanchions 40, through means well known in the art.

Operation of the landing gear assembly 20 of the present invention may be best understood by referring to FIGURES 1-4. The landing gear assembly is actuatable between an extended position, wherein the truck assembly 42 extends downwardly for taxiing and landing of the airplane 22, and a retracted position, wherein the landing gear assembly 20 is stowed within the OML of the fuselage 24 to minimize aerodynamic drag. In the extended position of FIGURE 1, the landing gear assemblies on both sides of the fuselage are placed sufficiently outboard from a center line extending longitudinally through the fuselage and midway between the fuselage sides of body to satisfy well known Federal Aviation Administration tip-over criteria. In particular, the landing gear must be placed sufficiently outboard to satisfy FAR Part 25, entitled "Airworthiness Standards: Transport Category Airplanes."

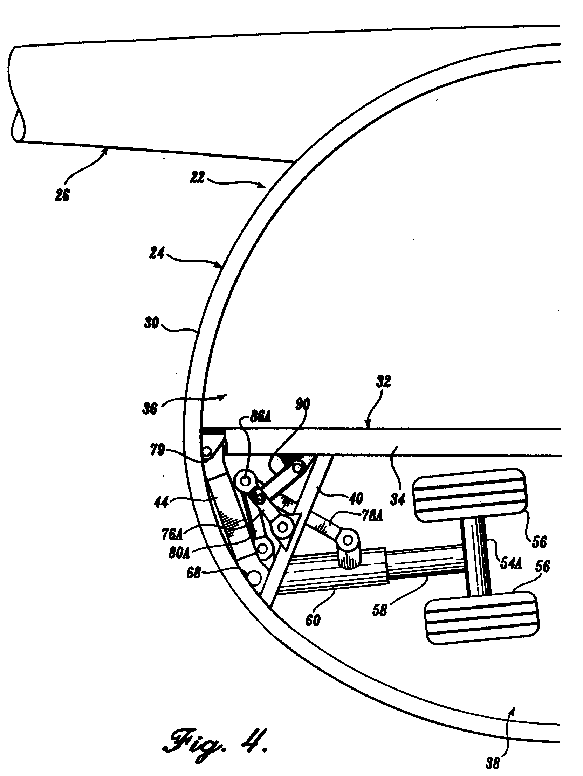

In the retracted position of FIGURE 4, the landing gear assembly 20 is stowed completely within the OML of the fuselage 24 without the use of aerodynamic drag-inducing fairings. In particular, the landing gear assembly 20 is stowed within a wheel well located completely within the OML of the fuselage 24. A plurality of landing gear doors (not pictured or described in detail as the design of such doors is well known within the art) conform to the OML when the landing gear is in the retracted position, thereby sealing the wheel well closed. As a result, the original OML is left intact and, therefore, the fuselage 24 retains its originally optimized aerodynamic profile.

Referring back to FIGURE 1, the shock strut 50 is rigidly braced in the extended position by the foldable linkage assembly 46. Retraction and extension of the landing gear assembly 20 is accomplished by operation of a well known linear push-pull actuator 90. The actuator 90 is pivotably connected at one end to one of the stanchions 40, substantially near the intersection between the top of the stanchion 40 and the floor beam 34. The other end of the actuator 90 is pivotably connected by a pivot pin 92 to one of the inboard drag links 76a and 76b. Although pivotably attaching the actuator 90 to one of the inboard drag links 76a and 76b is preferred, other attachment points, such as a well known extension arm extending transversely between the inboard drag links 76a and 76b, are also within the scope of the invention.

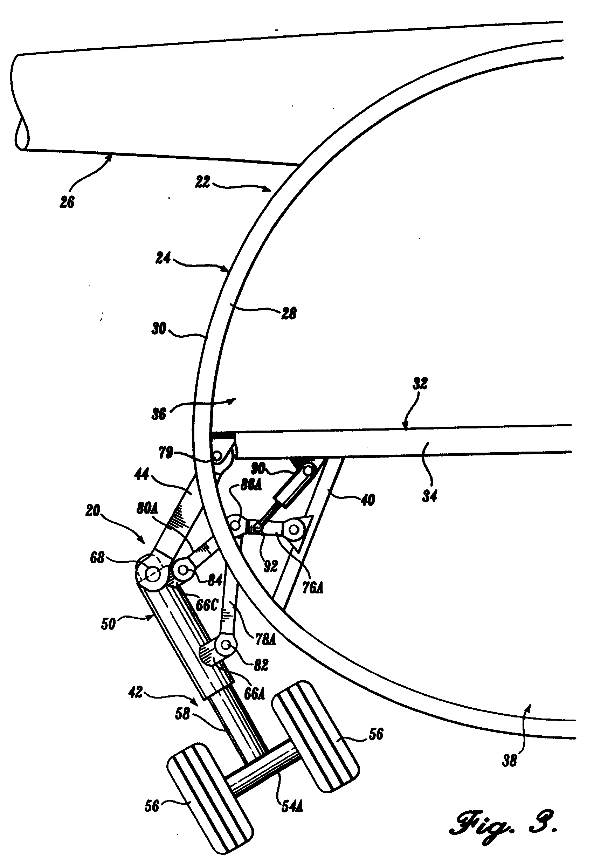

Referring to FIGURE 3, linear retraction of the actuator 90 causes retraction of the landing gear assembly 20 by swinging the truck assembly 42 inboard toward the fuselage 24. During retraction, the actuator 90 pulls upwardly on the inboard drag links 76a and 76b from their over-center locked position. As a result, the outboard drag links 78a and 78b and the yoke links 80a and 80b collapse and fold in on each other. In particular, the inboard drag links 76a and 76b rotate in clockwise direction about the pivot pin assembly 89. Simultaneously, the outboard drag links 78a and 78b and the yoke links 80a and 80b pivot in a counter-clockwise direction about the pivot pins 86a and 86b. As a result, the outboard drag links 78a and 78b and the yoke links 80a and 80b pull the shock strut 50 inwardly towards the fuselage 24, such that the shock strut 50 pivots about the first pivot point defined by the pivot pin 68. The actuator 90 continues to retract and pivot the shock strut 50 about the first pivot point until the shock strut 50 is substantially horizontal.

Stowage of the landing gear assembly 20 within the OML of the fuselage 24 may be best understood by referring to FIGURE 4. When the actuator 90 pulls the shock strut 50 to the substantially horizontal position, the actuator 90 continues to retract, thereby causing the shock strut 50 to pivot about the second pivot point defined by the pivot pin 79. The actuator 90 rotates the shock strut 50 in an inboard direction about the second pivot point to stow the landing gear completely within the OML of the fuselage 24 without the use of aerodynamic fairings. Thus, as configured, the shock strut 50 pivots about two pivot points during its reciprocatable actuation between the extended and retracted positions. Further, the foldable linkage assembly 46 provides an effective load transfer, such that a single actuator is capable of actuating the landing gear assembly 20 between the extended and retracted positions. While a single actuator is preferred, a landing gear assembly having additional actuators is also within the scope of the present invention.

Although it is preferred to sequentially retract the landing gear assembly 20 by first pivoting the shock strut 50 about the first pivot point and then about the second pivot point, a nonsequential retraction, such as simultaneously pivoting the shock strut 50 about the first and second pivot points, is also within the scope of the invention. Actuation of the landing gear assembly 20 from the stowed position back to the extended position is accomplished by reversing the actuation sequence.

The previously described version of the present invention provides several advantages over currently available landing gear. First, stowing the landing gear within the fuselage without either modifying the frames of the fuselage to include body frame extensions or aerodynamic fairings leaves the OML of the fuselage unaltered from its optimized design shape. As a result, there is better overall airplane performance. Further, a landing gear formed in accordance with the present invention is mechanically simpler due to the minimization of complex linkage assemblies. Such a landing gear is not only lighter in weight, but is also simpler and cheaper to manufacture and maintain than those currently available or proposed for an aircraft in which wing mounted gear is not feasible. Finally, a landing gear formed in accordance with the present invention also has the added advantage of using a single actuator to actuate the landing gear between its retracted and extended positions. Thus, a landing gear formed in accordance with the present invention is economical, lightweight and does not require alteration of the OML of a fuselage with aerodynamic drag inducing fairings.

From the foregoing description, it can be seen that a retractable landing gear assembly formed in accordance with the present invention incorporates many novel features and offers significant advantages over currently available landing gear assemblies. While presently preferred embodiments of the invention have been illustrated and described, it is to be understood that within the scope of the appended claims, various changes can be made therein without departing from the spirit of the invention.

## Claims

The embodiments of the invention in which an exclusive property or privilege is claimed are defined as follows:

1. A retractable landing gear assembly for an airplane, the airplane including a fuselage having an outer mold line, the landing gear assembly comprising:
(a) reciprocating means for reciprocating the landing gear assembly between an extended position for taxiing and landing of the airplane and a retracted position to stow the landing gear assembly within the outer mold line of the fuselage to minimize aerodynamic drag, the reciprocating means having a first end pivotably attached to the airplane and a longitudinally spaced second end; and
(b) an elongate strut assembly having longitudinally spaced first and second ends, the strut first end being attached to the second end of the reciprocating means for swinging movement of the strut assembly between the extended and retracted positions; and
(c) at least two wheels journaled to the second end of the strut assembly.

2. The retractable landing gear assembly of Claim 1, wherein the reciprocating means comprising an elongate link having a first end pivotably attached to the airplane and a longitudinally spaced second end pinned to the strut assembly first end, the link first end being a first pivot point and the link second end being a second pivot point.

3. The retractable landing gear assembly of Claim 2, further comprising an actuator extending between the airplane and the landing gear assembly for selective actuation of the landing gear assembly between the extended and retracted positions by pivoting the strut assembly about the first and second pivot points.

4. The retractable landing gear assembly of Claim 3, further comprising a foldable linkage assembly pinned between the airplane and the strut assembly for stiffening the strut assembly in the extended position.

5. A landing gear assembly for an airplane, the airplane having a fuselage defining an outer mold line, the landing gear assembly comprising:
(a) an elongate link for reciprocating the landing gear assembly between an extended position for taxiing and landing of the airplane and a retracted position to stow the landing gear assembly within the outer mold line of the fuselage to minimize aerodynamic drag, the link having a first end pivotably attached to the airplane and a longitudinally spaced second end, the link first end being a first pivot point and the link second end being a second pivot point;
(b) an elongate strut assembly having longitudinally spaced first and second ends, the first end being pivotably attached to the link second end for swinging movement of the strut assembly between the extended and retracted positions;
(c) at least two wheels journaled to the strut second end; and
(d) an actuator extending between the airplane and the landing gear assembly for selective actuation of the landing gear assembly between the extended and retracted positions by pivoting the strut assembly about the first and second pivot points.

6. The landing gear assembly of Claim 5, further comprising a foldable linkage assembly pinned between the airplane and the strut assembly for stiffening the strut assembly in the extended position.

7. A main landing gear assembly for an airplane, the airplane having a fuselage defining an outer mold line, the main landing gear assembly comprising:
(a) an elongate link for reciprocating the landing gear assembly between an extended position for taxiing and landing of the airplane and a retracted position to stow the landing gear assembly within the outer mold line of the fuselage to minimize aerodynamic drag, the link having a first end pivotably attached to the airplane and a longitudinally spaced second end, the link first end being a first pivot point and the link second end being a second pivot point;
(b) an elongate shock strut assembly having longitudinally spaced first and second ends, the first end being pivotably attached to the link second end for swinging movement of the shock strut assembly between the extended and retracted positions;
(c) at least two wheels journaled to the shock strut assembly second end;
(d) an actuator extending between the airplane and the landing gear assembly for selective actuation of the landing gear assembly between the extended and retracted positions by pivoting the shock strut assembly about the first and second pivot points; and
(e) a foldable linkage assembly pinned between the airplane and the shock strut assembly for stiffening the shock strut assembly in the extended position.
